# EUROPEAN PATENT SPECIFICATION

(11) **EP 3 076 397 B1**
(45) Date of publication and mention of the grant of the patent: **22.08.2018**
(21) Application number: 14864912.2
(22) Date of filing: 03.06.2014
(51) Int. Cl.: G21C 3/07, G21C 3/08, G21C 3/04, G21C 3/30, G21C 21/02

(54) **FUEL ROD CLADDING, FUEL ROD AND FUEL ASSEMBLY**
BRENNSTABHÜLLE, BRENNSTAB UND BRENNSTOFFANORDNUNG
ENVELOPPE POUR CRAYON DE COMBUSTIBLE, CRAYON DE COMBUSTIBLE ET ASSEMBLAGE DE COMBUSTIBLE

(30) Priority: 19.11.2013 RU 2013151156
(43) Date of publication of application: 05.10.2016
(73) Proprietor: Joint Stock Company "Akme-Engineering", Moscow 115035 (RU)
(72) Inventor: DERUNOV, Viacheslav Vasilievich, g. Obninsk Kaluzhskaya obl. 249037 (RU); MAYOROV, Viktor Mihailovich, g. Obninsk Kaluzhskaya obl. 249034 (RU); POMESCHIKOV, Pavel Andreevich, g. Obninsk Kaluzhskaya obl. 249037 (RU); RUSANOV, Aleksander Evgenievich, g. Obninsk Kaluzhskaya obl. 249032 (RU); SMIRNOV, Aleksandr Alekseevich, g. Obninsk Kaluzhskaya obl. 249037 (RU); SHULEPIN, Sergey Viktorovich, g. Obninsk Kaluzhskaya obl. 249033 (RU); SHARIKPULOV, Said Mirfaisovich, Moskovskaya obl. 143083 (RU)
(74) Representative: Mitev, Mitko Karushkov
(86) International application number: PCT/RU2014/000407
(87) International publication number: WO 2015/076697

(56) References cited:
- CN-A- 103 106 929
- GB-A- 1 046 147
- JP-A- S63 434
- JP-A- S63 434
- JP-A- H02 163 694
- RU-C1- 2 298 848
- RU-U1- 38 421
- US-A- 3 282 335

## Description

### Pertinent art

The invention relates to nuclear power engineering and can be used for manufacturing of fuel rods, fuel assemblies for reactors with heavy liquid-metal coolant, as well as for manufacturing of dummy elements for application in irradiation devices in order to investigate real fuel rods operability.

### Related art

Broadly used fuel rods are those the cladding of which represents a metallic tubular element made of a metal or alloy resistant to heavy liquid-metal coolant with at least one spirulate fin that protrudes the surface of the tubular element (see abstract to JPH02163694 publication). A fuel rod itself made in accordance with this patent includes cladding, where uranium or plutonium oxide grains are loaded and end caps are installed on both ends of the cladding. Spirulate fins of the cladding are made integrally with a tubular element with preset height and quantity of turns over the entire length of the tube on its external surface. The fins contribute to maintaining distance between fuel rods during their operation and allow achieving better heat dissipation.

Unfortunately the abstract does not disclose composition of the material from which the fuel rod cladding and fins are made, and it does not permit to assess performance characteristics of the fuel rod itself and its resistance to heavy liquid-metal-coolant.

Patent RU2267175 discloses a fuel rod cladding with fins made of aluminum and intended to be used in IRT research reactor. Each cladding of this type is fitted with four spirulate spacer fins, and cross-section of each fin represents a rectangle.

The patent also discloses the fuel rod itself that includes the above mentioned aluminum cladding with spirulate spacer fins on the external surface, sealed with end-caps on both ends, with fuel kernel located inside it.

The patent also discloses a fuel assembly that includes an enclosure with fuel elements located inside it as well as spacer grids for their allocation.

The disadvantage of the prior art technical solution is low stability of fuel rods and fuel assembly in heavy liquid-metal coolant melts, it is primarily caused by low melting temperature of aluminum - 660 °C.

Besides, rectangular cross section of fins in accordance with the mentioned patent will cause high concentrations of tension at points of fins coupling with cladding, and it will also lead to decrease of stability in heavy liquid-metal coolant environment.

The closest technical solution to the proposed one is disclosed in patent GB 1459562.

In accordance with this patent cladding represents a tubular element made of stainless steel with at least one spirulate fin located on its external surface. This fin represents a spirally wound wire (or two wires) spirally coiled around the tubular element.

Thus, the patent also discloses the fuel element itself that includes such cladding and uranium carbide nuclear fuel as well as fuel assembly that includes such elements.

As it appears from the description, the formation of fins as coiled wire allows fastening spirally wound fins only in some attachment points but not as a continuous line. It permits to avoid coolant stagnation in the points of coupling of fins and tubular element that permits the coolant to move along fuel rods more effectively. At the same time, as the authors of the invention say, fins construction will have enough rigidity so that fins could perform their spacer function.

Unfortunately no information is given in the above mentioned patent about the way how to fasten such fins; perhaps it is done by means of spot welding.

However, stainless steels have limited weldability. During resistance spot welding shrinkage cavities and hot cracks can appear in weld spots; they are able to enlarge in cladding material. Wire fastening to cladding by means of spot welding leads to formation of defects in cladding.

Besides, coiled wire fastened in separate points will move in coolant flow along fuel rod height and will tear away from cladding at welding points.

### Summary of the invention

Objective of the invention is enhancement of fuel rods and assemblies performance characteristics by means of ensuring long-term resistance of cladding in heavy liquid-metal coolant such as lead or eutectic alloy of lead and bismuth.

Technical result of the invention is enhancement of fuel rods and assemblies performance characteristics by means of ensuring long-term resistance of cladding in heavy liquid-metal coolant such as lead or eutectic alloy of lead and bismuth. Additional technical results are ensuring of fuel rod cladding fabricability, decrease of active zone hydraulic resistance and heat exchange processes intensification by means of ensuring easier heavy liquid metal coolant flow along fins. Besides, technical results are decrease of stress concentration and reduction of probabilities of defects near fins base, caused by either method of manufacturing or subsequent operation of a fuel rod; subsequently, elimination of corrosion failure of seams.

The following essential features influence reaching the above mentioned technical results.

Fuel rod cladding for reactors with heavy liquid-metal coolant represents a solid-rolled tubular element with spirulate fins located on the external surface of the above mentioned rod, made of chromium-silicon steel of martensite-ferrite class with ferrite grain not less than No. 7 in accordance with GOST 5639, and the shape of fins cross-section represents a trapezium with expansion angle from 22 to 40 °, and the shape of fins cross-section represents a trapezium with rounded vertex angles and flattened base angles (fillet).

In individual embodiments cladding can be made of steel with chromium contents 10 to 12 % wt and silicon contents 1.0 to 1.3 % wt.

It is preferred that cladding of the invention would have four spirulate fins located at equal distance from each other.

In this case each fin is at least 0.75 mm in height, wall thickness - no more than 0.6 mm and fin opening angle 30 to 40°.

In other embodiments the shape of fins cross-section represents a trapezium with rounded vertex angles, at that spherical radius is 0.2-0.35 mm.

The shape of fins cross-section can represent a trapezium with flattened base angles with fillet radius 0.55-0.9 mm.

The assigned task is solved using a fuel rod for reactors with heavy liquid-metal coolant that includes this cladding sealed with end-caps on both ends and nuclear fuel inside the cladding.

The assigned task is also solved using a fuel assembly for reactors with heavy liquid-metal coolant that includes a load-bearing frame with at least one retention grid and fuel rods manufactured in accordance with the above-mentioned essential features that are fixed in the retention grid.

Here, the spacing of fuel rods is performed according to "fin to fin" principle.

The assembly can contain two retaining grids located in upper and lower parts of the load-bearing frame.

The frame can be made as a tube.

### List of figures

The invention is disclosed by drawings, where Fig. 1 represents cladding appearance, Fig. 2 represents cross-section of cladding, Fig. 3 represents cross-section of one fin.

### Embodiment

The positions indicate the following:
1. Fuel rod cladding.
2. Spirulate spacer fins.
3. Rounded vertex angle of a fin.
4. Fillet base angle of a fin.

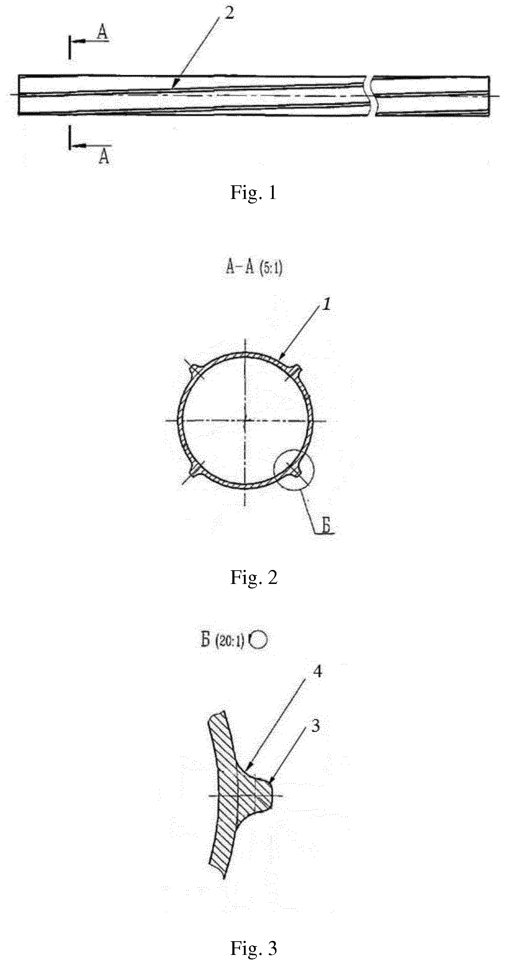

Cladding 1 (see Fig. 1 and Fig. 2) represents a solid-rolled tubular element with spirulate fins 2 located on the external surface of the cladding 1.

Cladding 1 is made of chromium-silicon steel of martensite-ferrite class with ferrite grain not less than No. 7 in accordance with GOST 5639 with external crest diameter from 9.8 to 13.5 mm, thickness of cladding is from 0.38 to 0.55 mm, internal diameter of cladding is from 7.2 to 11.2 mm, roughness of external and internal surfaces - no more than 1.2 µm of Ra parameter in accordance with GOST 2789. Steel 16Cr12MoWSiVNbB-Cindery (ESS823-Cindery) was used as chromium-silicon steel of martensite-ferrite class for best embodiment of the invention. This type of steel has the following composition: carbon - 0.14-0.18 % wt, silicon- 1.0-1.3 % wt, manganese - 0.5-0.8 % wt, chromium - 10.0-12.0 % wt, nickel - 0.5-0.8 % wt, vanadium - 0.2-0.4 % wt, molybdenum - 0.6-0.9 % wt, tungsten - 0.5-0.8 % wt,, niobium - 0.2-0.4 % wt, borium < 0.006 % wt (as per calculation), cerium- < 0.1 % wt and iron - the rest. Steel ESS823-Cindery is the most appropriate material for fuel rod claddings for reactors with heavy liquid-metal coolant according to cluster of features (high resistance to vacancy swelling, low speed of radiation-induced creep, high resistance to corrosion in Pb-Bi).

Quantity of fins can vary.

Cladding of the most desirable embodiment of the invention includes 4 fins.

Each fin 2 (see Fig. 3) protrudes the cladding and its cross-section represents a trapezium with rounded vertex angles and flattened base angles (fillet). Fin opening angle is from 22° to 40°, in the most desirable embodiments - from 30° to 40°.

This configuration ensures of fuel rod cladding fabricability, decreases of active zone hydraulic resistance and intensifies heat exchange processes by means of ensuring easier heavy liquid metal coolant flow along fins.

Besides, fins with rounded vertex angles and flattened base angles permit to decrease of stress concentration and reduce probabilities of defects near fins base, caused by either method of manufacturing or subsequent operation of a fuel rod; subsequently, elimination of corrosion failure of fuel rods.

The most desirable cladding parameters are as follows:
- cladding wall thickness - no more than 0.6 mm, preferably 0.4 mm, fin height - from 0.55 mm to 0.85 mm, preferably 0.75 mm,
- opening angle - from 22° to 40°, preferably 30°,
- spherical radius of vertex angle 3 - from 0.2 to 0.35 mm, preferably 0.2 mm, and
- fillet radius of base angle 4 - from 0.55 to 0.9 mm, preferably 0.7 mm.

Each fin 2 is spaced from another at equal distance and spirally coiled with step from 450 mm to 1000 mm, preferably 750 mm. It is preferable that cladding 1 is made with left-handed coiling of fins.

### Example of an actual embodiment

A tube with four spirally wound fins for making fuel rod claddings is manufactured of a ESS823-Cindery steel tubular blank using the method of cold rolling.

Crest diameter of the cladding is 13.5 mm, thickness of the cladding wall is 0.4 mm, internal diameter of the cladding is 11.2 mm. Fins are 0.75 mm in height, width at half-height of fins is 0.75 mm, fin height and wall thickness ratio is 1.85 mm. Fin cross-section represents a trapezium with flattened vertex angles with spherical radius 0.2 mm and with fillet radius 0.7 mm. Fin opening angle is 30°. Fins were spirally coiled with step 750 mm (left-handed coiling).

Nuclear fuel based on uranium dioxide was placed to this cladding and the fuel rods were sealed with upper and lower shanks (caps).

The manufactured fuel rods were mounted to a load-bearing frame, spaced from one another according to "fin to fin" principle and were attached to upper, intermediate and lower grid installed at the load-bearing frame. The resulting assembly was installed to reactor.

The invention allows manufacturing of cladding with fins as a whole as well as decreasing the probability of failures at points of high concentrations of tension, that ensures stable characteristics of heat and corrosion resistance during contact with heavy liquid-metal coolant at operation temperatures.

The invention permits to implement fuel rods spacing from adjacent rods ("fin to fin") between upper and lower support (for fuel rods) spacer grids of the fuel assembly, spacing from reflection shields and supporting elements of the fuel assembly (it permits to make the fuel assembly embodiment easier), and to ensure long-time resistance in heavy liquid-metal coolant environment (lead, eutectic alloy of lead and bismuth) provided that the corresponding heavy liquid-metal coolant technology (about 75 000 hours) as well as temperature and dose limitations of the fuel rod cladding are followed.

## Claims

1. Fuel rod cladding (1) for reactors with heavy liquid-metal coolant, **characterized in that** it represents a solid-rolled tubular element with spirulate fins (2) located on the external surface of the above mentioned rod, made of chromium-silicon steel of martensite-ferrite class with ferrite grain not less than No. 7 in accordance with GOST 5639, and the shape of fins cross-section represents a trapezium with expansion angle from 22 to 40°, and the shape of fins cross-section represents a trapezium with rounded vertex angles and flattened base angles (4).

2. Cladding in accordance with claim 1, **characterized in that** it is made of steel with chromium contents 10 to 12 % wt and silicon contents 1.0 to 1.3 % wt.

3. Cladding in accordance with claim 1, **characterized in that** it has four spirulate fins located at equal distance from each other.

4. Cladding in accordance with claim 3, **characterized in that** each fin is at least 0.75 mm in height, wall thickness - no more than 0.6 mm and fin opening angle is from 30 to 40°.

5. Cladding in accordance with claim 1, **characterized in that** the shape of fins cross-section represents a trapezium with rounded vertex angles with spherical radius 0.2-0.35 mm.

6. Cladding in accordance with claim 1, **characterized in that** the shape of fins cross-section represents a trapezium with flattened base angles with fillet radius 0.55-0.9 mm.

7. A fuel rod for reactors with heavy liquid-metal coolant **characterized in that** it includes cladding made in accordance with any of the above mentioned claims 1-6, sealed with end-caps on both ends and nuclear fuel located inside the above mentioned cladding.

8. A fuel rod assembly for reactors with heavy liquid-metal coolant **characterized in that** it includes a load-bearing frame with at least one retention grid and fuel rods manufactured in accordance with claim 7 and attached to the retention grid.

9. Fuel rod assembly in accordance with claim 8, **characterized in that** spacing of fuel rods from each other is performed according to "fin to fin" principle.

10. Fuel rod assembly in accordance with claim 8, **characterized in that** it contains two retaining grids located in upper and lower parts of the load-bearing frame.

11. Fuel rod assembly in accordance with claim 8, **characterized in that** the load-bearing frame is made as a tube.

## Patentansprüche

1. Die Hülle des Brennstabs des Reaktors mit einem schweren Flüssigmetall-Wärmeträger, die **dadurch gekennzeichnet ist, dass** es sich um ein aus Chromsiliziumstahl ferritisch-martensitischer Klasse mit Ferritkorngröße von mindestens Klasse 7 It. GOST 5639 hergestelltes nahtloses Rohrelement mit spiralartig gewundenen, auf der Oberfläche des genannten Elementes angeordneten Rippen handelt, wobei jede Rippe einen Öffnungswinkel von 22 bis 40° aufweist, und die Form des Rippenquerschnittes im Schnitt ein Trapez mit abgerundeten Ecken am Trapezeckpunkt und mit abgeflachten Ecken in der Trapezbasis darstellt.

2. Die Hülle nach Anspruch 1 ist **dadurch gekennzeichnet, dass** sie aus Stahl mit 10 bis 12 Massenprozent Chrom und 1,0 bis 1,3 Massenprozent Silizium gefertigt ist.

3. Die Hülle nach Anspruch 1 ist **dadurch gekennzeichnet, dass** sie vier spiralartig gewundene, in einem gleichen Abstand zueinander angeordnete Rippen aufweist.

4. Die Hülle nach Anspruch 3 ist **dadurch gekennzeichnet, dass** jede Rippe eine Höhe von mindestens 0,75 mm, eine Wanddicke von höchstens 0,6 mm und einen Öffnungswinkel von 30 bis 40° aufweist.

5. Die Hülle nach Anspruch 1 ist **dadurch gekennzeichnet, dass** die Form des Rippenquerschnittes im Schnitt ein Trapez mit abgerundeten Ecken am Trapezeckpunkt darstellt, deren Rundungsradius 0,2-0,35 mm beträgt.

6. Die Hülle nach Anspruch 1 ist **dadurch gekennzeichnet, dass** die Form des Rippenquerschnittes im Schnitt ein Trapez mit abgerundeten Ecken an der Trapezbasis darstellt, deren Verbindungsradius 0,55-0,9 mm beträgt.

7. Der Brennstab für Reaktoren mit einem schweren Flüssigmetall-Wärmeträger ist **dadurch gekennzeichnet, dass** er eine nach einem der vorangehenden Ansprüche 1-6 ausgeführte Hülle aufweist, die an Stirnflächen durch Verschlussstopfen abgedichtet ist und in ihrem Inneren Kernbrennstoff aufweist.

8. Das Brennelement für Reaktoren mit einem schweren Flüssigmetall-Wärmeträger ist **dadurch gekennzeichnet, dass** es ein Grundgerüst und mindestens ein daran befestigtes Haltegitter sowie Brennstäbe umfasst, die entsprechend Anspruch 7 ausgeführt sind und im Haltegitter fixiert werden.

9. Das Brennelement nach Anspruch 8 ist **dadurch gekennzeichnet, dass** die Distanzierung von Brennstäben nach dem Prinzip "Rippe an Rippe" erfolgt.

10. Das Brennelement nach Anspruch 8 ist **dadurch gekennzeichnet, dass** es zwei Haltegitter umfasst, die im oberen und unteren Teil des Grundgerüstes angeordnet sind.

11. Das Brennelement nach Anspruch 8 ist **dadurch gekennzeichnet, dass** das Grundgerüst röhrenförmig ausgeführt ist.

## Revendications

1. La gaine de la cartouche de combustible des réacteurs à métaux lourds liquides est un élément tubulaire laminé sans soudure avec des nervures hélicoïdales contournées situées sur la surface extérieure de l'élément dénommé, en acier au silicium et chrome de la classe martensite-ferrite, au calibre des grains de ferrite correspondant au moins à numéro 7 en conformité avec GOST5639, l'angle d'ouverture de la chaque nervure étant 22 à 40°, et la forme de la section transversale de la nervure représentant en coupe un trapèze avec des angles arrondis au sommet du trapèze et avec des angles émoussés à la base du trapèze.

2. La gaine en conformité avec paragraphe 1 en diffère par le fait qu'elle est fabriquée en acier d'une teneur en chrome de 10 à 12% massique et silicium de 1,0 à 1,3% massique.

3. La gaine en conformité avec paragraphe 1 est **caractérisée en ce que** les nervures hélicoïdales contournées sont équidistantes.

4. La gaine en conformité avec paragraphe 3 est **caractérisée en ce que** la hauteur de la chaque nervure est d'au moins 0,75 mm, l'épaisseur de l'âme de la chaque nervure est d'au moins 0,6 mm et l'angle d'ouverture de chaque nervure est 30 à 40°.

5. La gaine en conformité avec paragraphe 1 est **caractérisée en ce que** la forme de la section transversale de la nervure représente en section un trapèze avec des angles arrondis au sommet du trapèze, le rayon du congé desquels étant 0,2-0,35 mm.

6. La gaine en conformité avec paragraphe 1 est **caractérisée en ce que** la forme de la section transversale de la nervure représente en section un trapèze avec des angles émoussés à la base du trapèze, le rayon du congé desquels étant 0,55-0,9 mm.

7. La cartouche de combustible des réacteurs à métaux lourds liquides est **caractérisée en ce qu'**elle comprend la gaine configurée en conformité avec l'un des alinéas 1-6 de la formule et scellée aux culasses avec des bouchons, et le combustible nucléaire qui est situé à l'intérieur de la gaine.

8. L'assemblage combustible pour les réacteurs à métaux lourds liquides est **caractérisée en ce qu'**il comprend une structure vitale et 1 grille de rétention (au minimum) et des cartouches de combustible montées sur la structure vitale en conformité avec paragraphe 7 de la formule et fixées par la grille de rétention.

9. L'assemblage en conformité avec paragraphe 8 est **caractérisée en ce que** le espacement des cartouches de combustible est effectué « nervure à nervure ».

10. L'assemblage en conformité avec paragraphe 8 est **caractérisée en ce que** il y a deux grilles de rétention situées dans les parties supérieure et inférieure de la structure vitale.

11. L'assemblage en conformité avec paragraphe 8 est **caractérisée en ce que** la structure vitale est de forme tubulaire.
